# EUROPEAN PATENT APPLICATION

(11) **EP 4 071 640 A1**
(43) Date of publication of application: **12.10.2022**
(21) Application number: 22166114.3
(22) Date of filing: 31.03.2022
(51) Int. Cl.: G06F 21/55, H04L 9/40

(54) **CONTROLLING COMMAND EXECUTION IN A COMPUTER NETWORK**

(30) Priority: 07.04.2021 GB 202104939
(71) Applicant: SSH Communications Security Oyj, 00380 Helsinki (FI)
(72) Inventor: PÖNKÄNEN, Sami, FI-00380 Helsinki (FI); SAINIO, Miikka, FI-00380 Helsinki (FI)
(74) Representative: Ruuskanen, Juha-Pekka

(57) **Abstract**

A security entity controls execution of commands by a target host in a computer system. The security entity terminates a secure transport channel carrying at least one stream of data from a client host, the security entity being a separate entity from the target host and the at least one stream of data comprising first type of data and second type of data comprising at least one command for the target host. An emulator of the security entity analyses the at least one stream of data to determine the at least one command for the target host and checks allowability of the at least one command for the target host. If the at least one command is determined allowable, execution of the at least one allowable command at the target host is caused by sending the at least one allowable command to the target host on an execution channel separately from the at least one stream of data.

## Description

This disclosure relates to execution of commands in a target host in a computer network, and more specifically controlling the execution of commands.

A computer network typically comprises various computing devices and equipment enabling communication of data between the devices. The computing devices are often called hosts. A host may also be provided by a virtual computing device or a container such as a Linux^{™} container or equivalent within a physical computing device.

A user can access a target host, e.g., a server, by means of a user device configured for communication in the computer network. The user device is understood to provide a client host to the target host. Users may wish to access target hosts in a computer network for various reasons. For example, a host like a server can provide a wide variety of services and/or store files or other content users may wish to use and/or upload. Various arrangements for accessing hosts and other entities in a computerized network system can be configured. Non-limiting examples of these include web browser based proxy access, bastion access, security protocol (e.g. secure shell protocol; SSH or Transport Layer Security; TSL) based access, file transfer access, and remote procedure call access. Accesses may be requested by various clients, e.g., end users, automation, and/or system administrators.

Data communications, access to hosts, user devices and hosts itself can be vulnerable to attacks by unauthorised parties. Sometimes user errors may also cause problems, for example because of input of an incorrect command. Organizations such as businesses, governmental or municipal organizations, non-profitable organizations and individual users thus desire protection on their computer systems and data stored therein and how the data and systems can be accessed and used.

In accordance with a proposal control is provided on commands that are sent for execution at target hosts. An aim of command control is to provide the ability to block unauthorized and/or incorrect commands to be executed. It has been proposed that this could be done by an entity that is located before the command can enter and be executed by a target host. Controlling execution of commands at target hosts can however be problematic. A problem is caused by the way various functions are layered in the protocol stack. For example, the way security, transport and connectivity functions are layered may limit visibility and possibilities to control commands transferred in one or more streams of data in a transport channel. A reason for this is that command data is typically visible on the higher protocol layers than the underlying encrypted transport channel layer. Thus, decrypting or otherwise "opening" data carried on the transport channel may simply result a stream of bytes. The stream of bytes can be meaningless and examining these may not reliably reveal the commands in the stream of data. Thus, if a privilege access management (PAM) entity is "on the line" the PAM would have to try to deduce the commands from the byte stream by parsing. This however may not provide secure enough outcome.

This is illustrated below using SSH-2 protocol internal architecture as a non-limiting example. Such architecture has well-separated layers as defined in RFC 4251 specifcation. The transport layer is per definitions of RFC 4253 specification and handles initial key exchange and key re-exchange as well as server authentication and sets up encryption and other basic functions such as compression and integrity verification. The transport layer interfaces the upper layers for sending and receiving plaintext packets. The user authentication layer per RFC 4252 specification handles client authentication and provides a number of authentication methods. The connection layer per definitions of RFC 4254 specification provides the concept of channels, channel requests and global requests. The requests are a type of commands sent to another party. A single SSH connection can host multiple channels simultaneously for transferring data in both directions. Channel requests are used to relay out-of-band channel-specific data. For example, a SSH client can request a server-side port to be forwarded using a global request. The SSH client requests a server-side port to be forwarded using a global request. Such an open architecture provides considerable flexibility, allowing use for a variety of purposes beyond a secure shell. The functionality of the transport layer alone is comparable to Transport Layer Security (TLS) and the user-authentication layer is highly extensible with custom authentication methods. The connection layer provides the ability to multiplex many secondary sessions into a single SSH connection.

In operation according to the exemplifying SSH protocol the commands are transferred and executed within a shell channel. The SSH protocol provides 'stdin', 'stdout' and 'stderr' streams inside a shell channel used for the data transport from a client to a target. These streams can be considered as simple "pipes" of data where bytes are sent and received between a client and a target, and there are no "commands" as such, just streams of data inside the shell cannel. These pipes are not synchronized in any way. Control of any commands before they reach the target and are executed by the target can thus become difficult and parsing commands out of the transporting shell channel may not work reliably. For example, with a stdin stream it is not possible to distinguish what bytes in the stdin stream are input to a shell and what bytes are input to commands executed within the shell. Also, if shell commands are executed from history or if auto completed shell commands are executed, the commands to be executed are not even present in the stdin stream. Command execution may thus be relatively easy target for a determined attacker. Parsing the stdout stream may have difficulties since a user input is typically only echoed by the target server. Therefore, although some, but not all commands from the shell history can be visible in the stdout stream, it may be difficult to reliably distinguish which bytes in the stdout stream are server echoed user input and which bytes in the stdout stream are output from commands executed within the shell. Furthermore, even if commands are successfully extracted from a stdout stream this may often be too late to be able to prevent or otherwise control execution of such commands.

It is noted that the SSH protocol is only used as an example and similar issues can occur in other protocols where analysis of the data streamed on the transport layer may not be sufficient to reliably and/or efficiently reveal commands in streams of data to be able to reliable control execution of commands at a target host. It is thus noted that the herein discussed issues are not limited to any particular protocol and data processing apparatus but may occur in any computer system where commands are communicated to target hosts in streams of data.

Embodiments of the invention aim to address one or several of the issues with prior art.

In accordance with an aspect there is provided a method for controlling execution of commands by a target host in a computer system, the method comprising terminating, in a security entity, a secure transport channel for carrying at least one stream of data from a client host, wherein the security entity is a separate entity from the target host and the at least one stream of data comprises first type of data and second type of data comprising at least one command for the target host, analysing by an emulator of the security entity the at least one stream of data to determine the at least one command for the target host, checking by the security entity allowability of the determined at least one command for the target host, determining at least one allowable command and causing, by the security entity execution of the at least one allowable command at the target host by sending the at least one allowable command to the target host on an execution channel separately from the at least one stream of data.

If it is determined that at least one command is nonallowable, the security entity can refrain from sending the at least one nonallowable command to the target host.

In accordance with another aspect an apparatus for controlling execution of commands by a target host in a computer system is provided, the apparatus comprising at least one processor, and memory storing instructions that, when executed, cause the apparatus to provide a security entity comprising an emulator, terminate, in the security entity, a secure transport channel from a client host to the target host carrying at least one stream of data, wherein the security entity is a separate entity from the target host and the at least one stream of data comprises first type of data and second type of data comprising at least one command for the target host, analyse by the emulator of the security entity the at least one stream of data to determine the at least one command for the target host, check by the security entity allowability of the determined at least one command for the target host, and in response to the determined at least one command is being determined allowable, cause execution of the at least one allowable command at the target host by sending the at least one allowable command to the target host on an execution channel separately from the at least one stream of data.

In the event the at least one command is determined nonallowable, the apparatus can refrain from sending the at least one nonallowable command to the target host.

In accordance with a more specific aspect the check comprises comparing the determined at least one command against a record of allowed commands and/or a record of prohibited commands.

The check may comprise exchanging data regarding allowability of the determined at least one command with an external security service provider server. The external security service provider server may provide functions of a Security Information and Event Management (SIEM) and/or Data Loss Prevention (DLP) entity.

At least one allowable command may be sent to the target host on the execution channel separated from the first type of data.

At least one allowable command may be sent to the target host on the execution channel separated from at least one other command in the at least one stream of data.

The first type of data may comprise user data. The second type of data may comprise control data.

The at least one stream of data may comprise stdin, stdout and/or stderr data stream according to the Secure Shell (SSH) protocol.

The first type of data associated with the at least one allowable command may be forwarded to the target host until end of execution of the at least one allowable command is determined.

End of execution of the at least one allowed command may be determined. In response thereto at least one associated channel from the client host may be reconnected.

SSH protocol stdin, stdout and/or stderr data stream associated with the executed at least one allowable command may be reconnected in response to end of execution of the at least one allowed command. Parsing of user input received from the client host may be continued.

A full line may be determined from the at least one stream of data. The full line may then be parsed to determine at least one command.

The security entity may send a single allowable command separated from other data on an execution message on the execution channel.

A computer program comprising computer readable program code means embodied therein, operable to cause a computer to perform the steps of the method described herein is also provided.

Various exemplifying embodiments of the invention are illustrated by the attached drawings. Steps and elements may be reordered, omitted, and combined to form new embodiments, and any step indicated as performed may be caused to be performed by another device or module. In the Figures:
Fig. 1 illustrates an example of a network architecture where certain aspects of the invention can be embodied;
Figs. 2 and 3 show flowcharts in accordance with certain examples;
Figs. 4 and 5 show signalling flowcharts in accordance with certain examples; and
Fig. 6 shows a data processing apparatus.

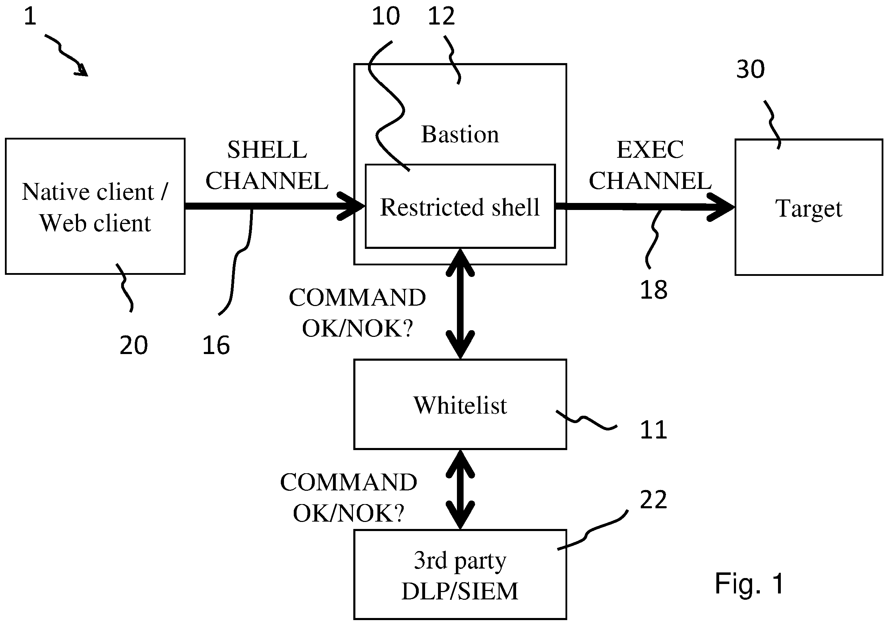

Figure 1 shows an example of a computer system architecture 1 where some of the herein described aspects may be embodied. In this particular example a user accesses, using his/hers user device, a target host 30. More particularly, Figure 1 shows a specific example of an aspect where an intermediate device 12 provides a security function between the target host 30 and a client host 20 capable of accessing the host. The access path via the network is indicated by the arrows from the user device, i.e., the client host 20 to the target host 30. The accessing user device 20 can be provided with an appropriate client entity, for example a native client or a web client. The native client may comprise, for example, a SSH client.

The term target host can be understood to refer to an entity which can be accessed by the client device 20. The target host 30 can provide a service for the user via the network 1. A target host may be provided, e.g., by a server or another physical data processing entity. A host may also be provided in virtual environment based on cloud computing and comprise, e.g., a virtual computing device (a virtual machine), a container or equivalent within a physical computing device.

The underlying computer network can comprise, for example, an Intranet of an enterprise or another organization, or a broader network such as the Internet. The network can be, e.g., an IPv4 (Internet Protocol version 4) or IPv6 (Internet Protocol version 6) based network. The network system may comprise one or more data networks.

The client device 20 may comprise a mobile device connected to the network over air interface. A wireless connection to the network can be provided via a base station based on, e.g., wireless local area network (WLAN), GSM/EDGE/HSPA, 3G, 4G, 5G, or WiMAX standards, and/or optical and near-field networks, or any future development of wireless standards. A client device may also comprise a computer device that is connected to the network via fixed line connection. The user device 20 may be configured for web-based access and/or comprise a native client adapted for communication with another entity, for example a proxy. The client may be, e.g., a SSH client. Other types of clients are also possible.

A network system and communications therein can be constantly monitored, e.g., by a privilege access management (PAM) entity that is "on the line" to protect the system from attacks by malicious users and data leaks and other unauthorised data communications and operations and/or to prevent data loss. To provide this the intermediate device 12 can comprise interface apparatus configured for communications with the target host 30 and client device 20 requesting access to the host such that the intermediate device can provide an intermediate data capturing node between the target hosts and the client devices. A data capture component can be provided as a standalone hardware component or embedded in another element, e.g., in a firewall, gateway or the like component. The data capture device can also be provided as a virtual machine set up in cloud computing environment. A proxy may also implement more than one protocol. Each proxy can contain a man-in-the-middle component for performing man-in-the-middle operation, a bastion, or a key escrow or other suitable method, for obtaining access to the plaintext of the session.

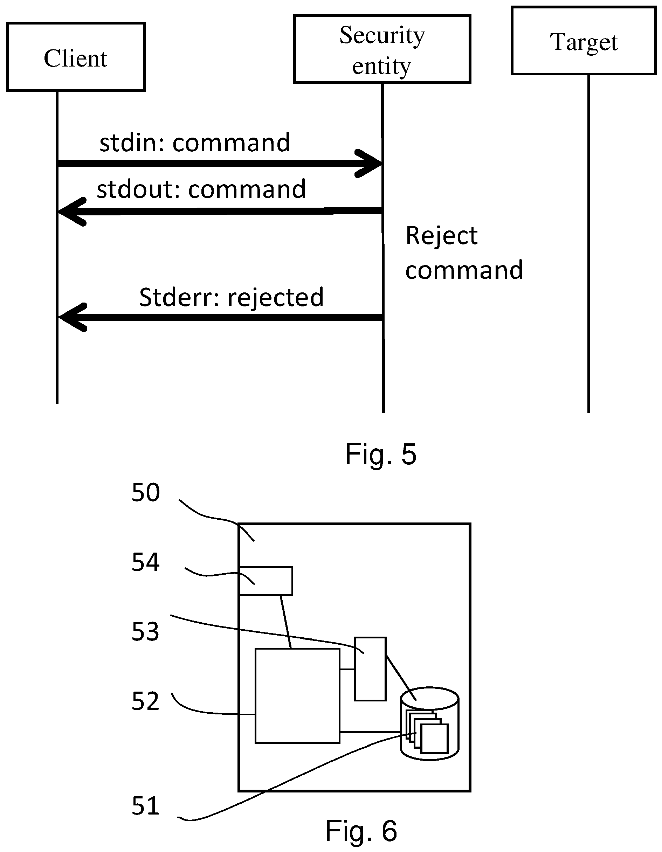

The intermediate apparatus 12 can be configured to provide an intermediate security function in the network where communications from client devices to target hosts are terminated at the intermediate apparatus. The intermediate apparatus comprises control apparatus connected to the interface apparatus and comprising at least one a processor, and a memory storing instructions that, when executed, cause the control apparatus to perform tasks described herein. An example of the control apparatus is shown in Figure 5.

At least a part of data flowing through the intermediate device can be encrypted. In such case the intermediate data processing device can be configured to provide a man-in-the-middle (MITM) type operation on the encrypted data flowing there through to obtain the plaintext of the data. The MITM type operation involves decryption of encrypted data. This can be based on knowledge of the private key or other encryption credential used in the encryption. The data capturing intermediate node is operated and maintained by a trusted party, typically the owner of the network, and can be provided with the necessary keys and/or other security information required for the decryption. It is noted that this is only an example and that the shown architecture and/or MITM type operation is not necessary in all scenarios. For example, the monitored passing data flow can also be plaintext, for example plaintext transport control protocol (TCP) or user datagram protocol (UDP) communications. Instead of the shown arrangement other network arrangements and modes are also possible. For example, as will be explained later, the interfaces can be in a bastion mode.

It is noted that the manner how the data capture is processed as such, e.g., decrypted is of lesser relevance in view of understanding the herein disclosed principles. What is relevant is that the intermediate apparatus can terminate session channels 16 from the client 20 to the intended target host 30, and that data including commands to the target host can be determined from the data streams communicated on the channel at the intermediate apparatus 12.

In accordance with an aspect the intermediate apparatus 12 can be configured to operate as a bastion host. A bastion host is generally understood as a special-purpose computer on a network specifically designed and configured to withstand attacks. The computer device providing the bastion host generally hosts a single application and all other services are removed or limited to reduce the threat to the computer device. It is hardened against attacks in this manner primarily due to its location and purpose, which is either on the outside of a firewall or in a demilitarized zone (DMZ). Bastion hosts are often used where access from untrusted networks or computers is possible.

The intermediate apparatus or host is configured to terminate transport channels (client channels) 16 from client devices 20. The termination and processing of the terminated channels described below can be handled by a specific security entity 10. The security entity can comprise an emulator configured to emulate at least a part of data received from the client via the client channel(s). The emulation can be restricted to specific aspects in the data. This can be done to optimise the processing load. In the below described examples the security entity is referred to as restricted shell.

The security entity 10 is provided as a separate entity from the target host 30. The separate security entity is configured to perform operations to determine commands in data streams from the client that are terminated at the security entity instead of being routed to the target host and check whether the determined commands are allowable or should be blocked. Execution of the command can then be controlled by the security entity accordingly. The control can be applied on a per command basis or per a command group basis.

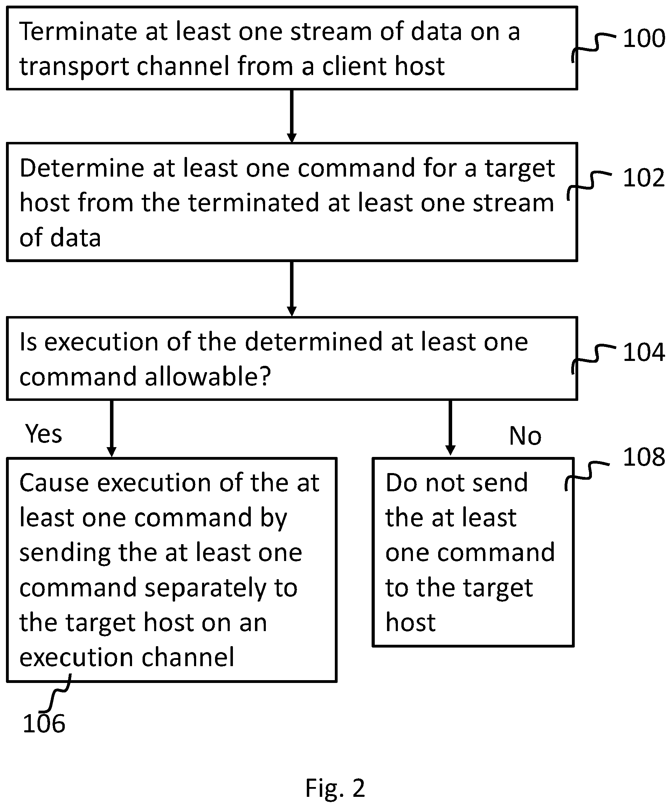

Figure 2 shows a flowchart according to an example how control of execution of commands by a target host can be provided by the security entity 10 in the computer system 1. A secure transport channel carrying at least one stream of data from a client host is terminated at 100 at the security entity. The security entity may be comprised, e.g., in a network entity that is arranged to capture or otherwise intercept communications from client hosts to target hosts. The terminated at least one stream of data may comprise first type of data and second type of data. The second type of data may comprise at least one command for the target host. An emulator of the security entity may analyse at 102 the terminated at least one stream of data to determine the at least one command for the target host. The emulation can be used to reveal command lines in the stream of data.

The security entity can check at 104 allowability of the determined at least one command for the target host. For example, determined commands can be checked against a record 11 of allowed and/or non-allowed commands and/or allowability can be checked from a third-party service provider.

The record 11 may comprise, e.g., a whitelist, and/or a blacklist of commands. The commands may be listed individually and/or in in appropriate groups. The record may be internal to the security entity 1. The record may also be provided elsewhere in the secure environment of the intermediate host 12. The record 11 may also be provided by an external security entity, such as a trusted whitelist service provider.

A further check can be made, in addition to checking an internal record such as a whitelist, based on exchange of data regarding allowability of the determined at least one command with an external security service provider server 22. The external security service provider server may provide, e.g., a Security Information and Event Management (SIEM) or Data Loss Prevention (DLP) functions.

If the determined at least one command is found to be allowable, the security entity causes at 106 execution of the at least one allowable command at the target host by selectively sending the at least one allowable command to the target host on an execution channel. The sending of the at least one command is separated from the at least one stream of data.

Only a single allowable command, or a selected group of command(s) may be sent. The allowable command(s) may be sent separated from the first type of data. The allowable command(s) may also be sent separated from at least one another command in the stream of data. The security entity may send a single allowable command separated from other data on an execution message on the execution channel.

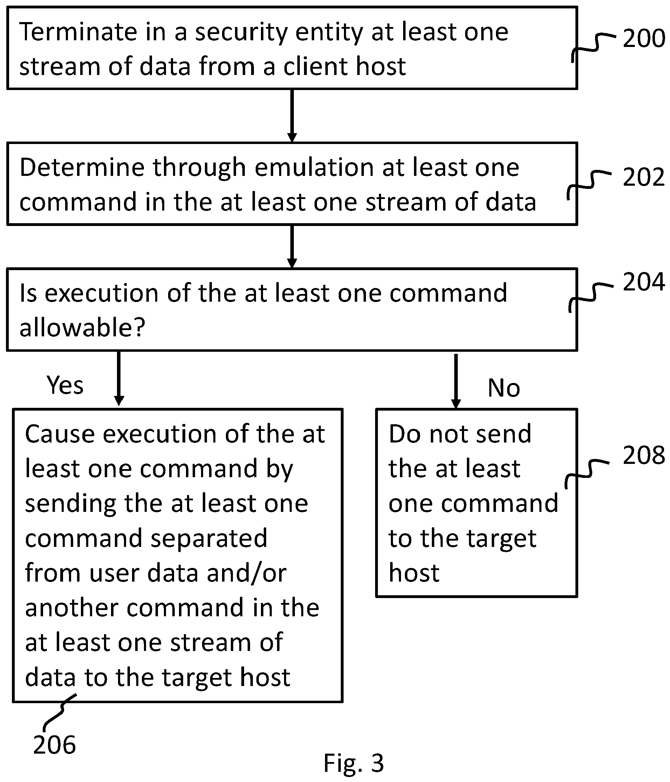

Figure 3 shows a flowchart according to another example of controlling execution of commands by a target host. At least one stream of data from a client host is terminated at 200 in a security entity. An emulator of the security entity may analyse at 202 the terminated at least one stream of data to determine at least one command for the target host. The security entity can then check at 204 allowability of the determined at least one command for the target host. The security entity can cause at 206 execution of the at least one command by sending the at least one command separated from user data in the at least one stream of data. The at least one command may also be separated from at least one other command in the at least one stream of data.

Separation of the allowable command(s) by and causing the execution thereof under the control of the security entity ca be used to improve control on execution of the commands, and hence security. For example, once the execution of the command(s) ends the session associated with the command(s) and communication of associated user data can be terminated, thus decreasing the possibility of having unnecessary or unwanted open channels in the system.

If the at least one command is determined to be non-allowable, the security entity refrains at 108 or 208 from sending the at least one non-allowable command to the target host. An error message may be sent to the client host, or any other appropriate action may be taken, including simply discarding the non-allowable command.

The data streams can comprise at least first type and second type of data. The first type of data may comprise user data. The second type of data may comprise control data, the control data comprising the command data. The first type of data associated with at least one allowable command can be forwarded to the target host as it is. The first type of data may be forwarded until the execution of the at least one allowable command ends. According to a possibility an associated transport channel from the client host is reconnected in response to determination of ending of execution of the at least one allowed command.

The at least one stream of data can comprise stdin, stdout and/or stderr data streams according to the SSH protocol. The stdin, stdout and/or stderr data streams according to the SSH protocol associated with the executed at least one allowable command may be reconnected at the end of execution while parsing of user input received from the client host is continued.

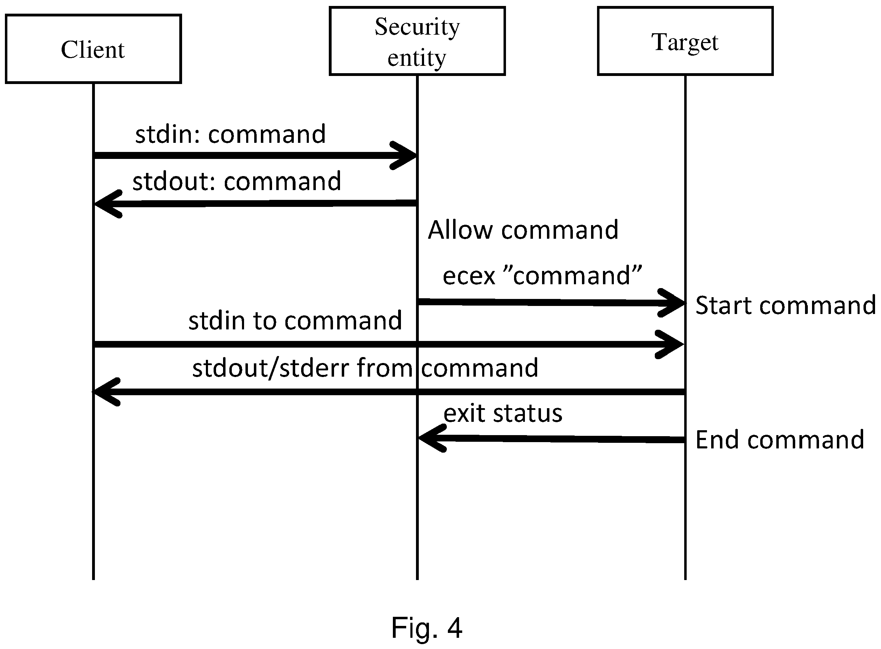

The following describes in more detail, with reference to the architecture shown in Figure 1, and signal flowcharts shown in Figures 4 and 5, examples for a security entity capable of controlling execution of commands at a target host based on analysis of data on a transport channel between a client host and the target host that is terminated at the security entity. More particularly, examples for processing shell commands that are run inside a SSH shell channel are explained.

The security entity can comprise a restricted shell 10 that is provided in an intermediate node 12 between a client 20 and a target 30. A restricted shell can run, for example, in an SSH Bastion microservice of a server. The restricted shell 10 is configured to terminate a shell channel 14 from the client, for example a SSH client or a web client, parse commands through emulation and cause execution of allowable commands on the target 30 using one or more execution channels 18.

A client shell may need to be set up before run time command control operations. The following described an example of steps when a client opens a new session channel and a target host is configured to use a SSH bastion restricted shell:
1. Client sends a session channel request and a bastion node accepts it.
2. Client sends env/pty requests and the bastion node stores them.
3. Client sends either a shell, an exec or a subsystem request. For exec and subsystem requests the bastion restricted shell may then:
   a. Open a session channel to the target,
   b. Send any stored env/pty requests to the target,
   c. Send exec/subsystem request to the target,
   d. Connect the client channel and the target channel stdin/stdout/stderr streams if determined allowable.
4. For the shell channels from the client the bastion node can create a restricted shell terminal state.

Examples for operation of the restricted shell are shown in Figures 4 and 5. The restricted shell may be run after the setup such that a shell channel stdin/stdout/stderr streams are connected to and terminated at the restricted shell. An emulator function of the restricted shell can then start processing user input upon receipt of the data. The restricted shell can be configured to support basic terminal shell line editing functions. However, although possible, it is not necessary for the restricted shell to be able to support complex functions such as command line history, command auto completion, shell variables, shell built-in commands and so forth.

User input received in the data streams via the client channel is analysed by the emulator. Once the user input contains a full line the restricted shell can parse the line into a sequence of one or more commands. Each command can be validated against one or more whitelists and/or blacklists. The listing can comprise individual commands and/or groups of commands. It is also possible to send the line to a security information and event management (SIEM) entity.

Any commands not allowed to be executed are failed immediately. Allowable commands can continue to execution on the target server. Command execution on target server can take place, e.g., in following steps:
1. Bastion opens a session channel to the target.
2. Bastion sends any stored env/pty requests to the target.
3. Bastion sends the shell command as exec request "sh -I -c 'command'"
4. Bastion connects the client channel and the target channel stdin/stdout/stderr streams. Any user input and command output is forwarded between the client and the target.
5. When the shell command execution finishes, bastion reconnects client channel and restricted shell stdin/stdout/stderr streams and continues parsing user input.

A benefit of the restricted shell approach discloses herein is that it is difficult to circumvent.

Figure 6 shows an example of data processing apparatus for providing necessary data processing functions to implement the above described operations. The data processing apparatus 50 can be for example integrated with, coupled to and/or otherwise arranged for controlling the intermediate node 12 of Figure 1. In addition to the command determination and execution control the data processing apparatus 50 can be arranged to provide overall control on communication sessions, encryption and decryption, authenticators and/or any additional operations. A data processing apparatus can determine which key(s) or other authenticators and credentials are needed for the control operations. For these purposes the control apparatus comprises at least one memory 51, at least one data processing unit 52, 53 and at least one input/output interface 54. Via the interface the apparatus can be coupled to other entities. The control apparatus can be configured to execute an appropriate software code to provide the control functions. The control apparatus can also be interconnected with other control entities. Means for providing an intermediate security function in a computer network between hosts and devices capable of accessing the hosts can comprise an appropriate data processing and interface arrangement.

The data processor facility of the intermediate host can be configured to terminate and process requests from the client device attempting to access the host 30 as explained above. In addition to these operations described, intermediate hosts may be configured to perform various other operations such as encryption, decryption, authentication and/or obtaining authenticators, keys and other security credentials for use in processing requests from clients. This may be provided by communication with one or more external security devices and responses therefrom. The intermediate host may also be provided with an integrated security device, and authenticators or other credentials may be requested therefrom. The intermediate host may further be configured to monitor communications therethrough, for example communications that use obtained authenticators. The intermediate device may also be configured to control communications that have been established based on authenticators from the security device. Examples of possible operations by intermediate hosts are described, for example, in US patents US 10,523,445 and US 9,538,376 assigned to SSH Communications Security Oyj.

A restricted shell may be also configured to support per-session command history and basic line editing functions.

A target server may be configured to support the execution channel. For example, SSH exec may be supported. Each shell command may be provided as a separate login on the target host.

The disclosed principles offer a difficult to circumvent execution control. The solution can provide agentless operation. It also works for native clients and web clients.

In accordance with an example hosts can be given a logical role. That is, in certain applications the hosts may not necessarily need to be identified by specific names and identities but can be assigned into logical roles. For example, clients may have logical roles such administrator, internal user, external user, webmaster, auditor and so forth. The target hosts can have, for example, roles such as web servers, database servers (e.g., Oracle^{™} database servers), etc. The hosts can be configured with static role-based templates. The host configuration and application software can be provisioned with an automated system configuration tool. Examples of such tools include those offered under trade names such as CHEF, PUPPET, ANSIBLE, etc. A logical role can be provisioned with a configuration tool template. Based on the logical roles features the hosts can be mapped on system level accounts and other information such as command allowability records. The roles can be used as a basis of logical privileges in the system, for example for administrative and/or security reasons, and/or for hiding the identities of the hosts.

The various embodiments and their combinations or subdivisions may be implemented as methods, apparatuses, or computer program products. According to an aspect at least some of the functionalities are provided in virtualised environment. Methods for downloading computer program code for performing the same may also be provided. Computer program products may be stored on non-transitory computer-readable media, such as memory chips, or memory blocks implemented within the processor, magnetic media such as hard disk or floppy disks, and optical media such as for example DVD and the data variants thereof, CD, magnetic disk, or semiconductor memory. Method steps may be implemented using instructions operable to cause a computer to perform the method steps using a processor and a memory. The instructions may be stored on any computer-readable media, such as memory or nonvolatile storage.

The required data processing apparatus may be provided by means of one or more data processors. The described functions at each end may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non- limiting examples. The data processing may be distributed across several data processing modules. At least some of the processing and/or hosts can be provided in virtualised environment.

A data processor may be provided by means of, for example, at least one chip. The memory or memories may be of any type suitable to the local technical environment and may be implemented using any suitable data storage technology, such as semiconductor based memory devices, magnetic memory devices and systems, optical memory devices and systems, fixed memory and removable memory.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in various combinations in, as non-limiting examples, hardware, software, firmware, special purpose circuits or logic, general purpose hardware or controller or other computing devices, or some combination thereof.

A centralized and scalable access and command execution control solution may be provided for elastic cloud environments. Access right updates can be made instantaneously. Per-host changes may not be required. Certain aspects support both interactive and non-interactive (machine-to-machine) connections.

The various aspects and features discussed above can be combined in manners not specifically shown by the drawings and/or described above.

The foregoing description provides by way of exemplary and non-limiting examples a full and informative description of exemplary embodiments and aspects of the invention. However, various modifications and adaptations falling within the scope of this disclosure may become apparent to those skilled in the relevant arts in view of the foregoing description, when read in conjunction with the accompanying drawings and the appended claims.

## Claims

1. A method for controlling execution of commands by a target host in a computer system, comprising:
terminating, in a security entity, a secure transport channel for carrying at least one stream of data from a client host, wherein the security entity is a separate entity from the target host and the at least one stream of data comprises first type of data and second type of data comprising at least one command for the target host,
analysing by an emulator of the security entity the at least one stream of data to determine the at least one command for the target host,
checking by the security entity allowability of the determined at least one command for the target host,
determining at least one allowable command, and
causing execution of the at least one allowable command at the target host by sending the at least one allowable command to the target host on an execution channel separately from the at least one stream of data.

2. The method according to claim 1, the checking comprising:
comparing the determined at least one command against a record of allowed commands and/or a record of prohibited commands, and/or
exchanging data regarding allowability of the determined at least one command with an external security service provider server.

3. The method according to claim 2, wherein the external security service provider server provides functions of a Security Information and Event Management (SIEM) and/or Data Loss Prevention (DLP) entity.

4. The method according to any preceding claim, comprising at least one of:
sending the at least one allowable command to the target host on the execution channel separated from the first type of data,
sending the at least one allowable command to the target host on the execution channel separated from at least one other command in the at least one stream of data,
sending a single allowable command separated from other data on an execution message on the execution channel, and/or
forwarding the first type of data associated with the at least one allowable command to the target host until determining end of execution of the at least one allowable command.

5. The method according to any preceding claim, wherein the first type of data comprises user data and the second type of data comprises control data, and/or wherein the at least one stream of data comprises stdin, stdout and/or stderr data stream according to the Secure Shell (SSH) protocol.

6. The method according to any preceding claim, comprising determining end of execution of the at least one allowed command, and in response thereto reconnecting an associated channel from the client host.

7. The method according to claim 6, comprising reconnecting stdin, stdout and/or stderr data stream according to the SSH protocol associated with the executed at least one allowable command while continuing parsing of user input received from the client host.

8. The method according to any preceding claim, comprising determining a full line from the at least one stream of data and parsing the full line to determine at least one command on the full line.

9. An apparatus for controlling execution of commands by a target host in a computer system comprising at least one processor, and memory storing instructions that, when executed, cause the apparatus to:
provide a security entity comprising an emulator,
terminate, in the security entity, a secure transport channel from a client host to the target host carrying at least one stream of data, wherein the security entity is a separate entity from the target host and the at least one stream of data comprises first type of data and second type of data comprising at least one command for the target host,
analyse by the emulator of the security entity the at least one stream of data to determine the at least one command for the target host,
check by the security entity allowability of the determined at least one command for the target host, and
in response to the at least one command being determined allowable, cause execution of the at least one allowable command at the target host by sending the at least one allowable command to the target host on an execution channel separately from the at least one stream of data.

10. The apparatus according to claim 9, configured to at least one of:
compare the determined at least one command against a record of allowed commands and/or a record of prohibited commands; and/or
exchange data regarding allowability of the determined at least one command with an external security service provider server.

11. The apparatus according to claim 9 or 10, configured to at least one of:
send the at least one allowable command to the target host on the execution channel separated from the first type of data;
send the at least one allowable command to the target host on the execution channel separated from at least one other command in the at least one stream of data;
determine end of execution of the at least one allowed command, and in response thereto reconnect an associated channel from the client host, and/or
forward the first type of data associated with the at least one allowable command to the target host until end of execution of the at least one allowable command has been determined.

12. The apparatus according to any of claims 9 to 11, wherein the first type of data comprises user data and the second type of data comprises control data, and/or wherein the at least one stream of data comprises stdin, stdout and/or stderr data stream according to the Secure Shell (SSH) protocol.

13. The apparatus according to any of claims 9 to 12, configured to reconnect a data stream associated with an executed at least one allowable command and continue parsing of user input received from the client host.

14. The apparatus according to any of claims 9 to 13, configured to:
determine a full line from the at least one stream of data and parse the full line to determine at least one command on the full line, and/or
send a single allowable command separated from other data on an execution message on the execution channel.

15. A computer program comprising computer readable program code means embodied therein, operable to cause a computer to perform the steps of any of claims 1 to 8.
